**Europäisches Patentamt**

(19) **European Patent Office**

**Office européen des brevets**

(11) Publication number : **0 354 208 B1**

# (12) EUROPEAN PATENT SPECIFICATION

(45) Date of publication of patent specification :
23.09.92 Bulletin 92/39

(51) Int. Cl.⁵ : **B01L 3/00,** G01N 21/03

(21) Application number : **87907627.1**

(22) Date of filing : **12.10.87**

(86) International application number :
**PCT/SE87/00462**

(87) International publication number :
**WO 88/06062 25.08.88 Gazette 88/19**

(54) **DEVICE AND METHOD FOR VISUAL IDENTIFICATION OF SAMPLE POSITIONS IN PLATES WITH MULTIPLE WELLS, AND USE OF THE DEVICE.**

(30) Priority : **20.02.87 SE 8700700**

(43) Date of publication of application :
**14.02.90 Bulletin 90/07**

(45) Publication of the grant of the patent :
**23.09.92 Bulletin 92/39**

(84) Designated Contracting States :
**AT BE CH DE FR GB IT LI LU NL SE**

(56) References cited :
**EP-A- 0 065 409
WO-A-81/00063
US-A-44 667 40
Derwent's abstract No. 84-206032/33, SU 1 061
033 - A**

(73) Proprietor : **FRIBERG, Jan Ove
Meijerfeldts vag 3
S-183 50 Taby (SE)**
Proprietor : **GLINDRE, Jan Olof Valdemar
Gransholmsbacken 16
S-127 42 Skarholmen (SE)**

(72) Inventor : **FRIBERG, Jan Ove
Meijerfeldts vag 3
S-183 50 Taby (SE)**
Inventor : **GLINDRE, Jan Olof Valdemar
Gransholmsbacken 16
S-127 42 Skarholmen (SE)**

(74) Representative : **Hermansson, Birgitta et al
AB Dahls Patentbyra P.O. Box 606
S-182 16 Danderyd (SE)**

## Description

The present invention relates to a means for facilitating manual work when samples are added to wells in transparent multi-well plates. More specifically the present invention relates to methods, devices and the use of a specified technique for automatically indicating those wells in a multi-well plate in which sample solutions have been added in such a way that they can easily be identified and sorted out from wells in which no sample solutions have been added.

A multitude of methods for determination of analytes in body fluids and other media are currently employed in the fields of medical and biological research and diagnostics. Among these analytical methods immunoassays of various types are commonly used, because of the combination of high sensitivity and selectivity and the possibilities to test large numbers of samples relatively easy. Radioimmunoassay (RIA) is one such method which is frequently employed for quantification in various high- and low molecular weight analytes. The method utilizes a radioactively labelled tracer antigen, which is the same substance as the analyte, and antibodies against the analyte.

During the last few years, however, the development of new methods has resulted in immunoassays which are not dependent on any radioactivity but, for example, use enzymes as tracer-labels instead. The enzyme-linked immunosorbent assay (ELISA) is an example of such an assay. ELISA can when properly optimized be equal to RIA in sentivity or often enven more sensitive. Moreover, when no radioactive tracer is present samples can be positioned very close to each other through all steps of handling including the final spectrophotometrical measurements.

A large variety of specially designed instruments and devices for ELISA-technology are presently available on the market. A break-trough in this area was the so called "multi-well plate", with a standard size and design. This type of ELISA device is nowadays widely accepted and used both for immunoassays and other purposes particularly in the areas of serology, immunolgy and microbiology. The most common embodiment of the muti-well plate is made of transparent plastics, 125x85 mm in size, having 96 small wells. Each well can carry a total volume of approximately 350 ul and can be considered as an individual "test-tube". Thus, in this type of multi-well plate 96 different samples can be handled in a very small area.

Furthermore, the mutli-well plate has by itself led to development of instruments and devices particularly intended for its use. Employing such instruments for pipetting, dispensing, washing, spectrophotometrical measurements etc will readily offer rational handling and a fair degree of automation to almost any laboratory and at reasonable costs. Despite this possibilities addition of individual samples is still performed manually in most laboratories.

In connection with manual addition of samples a problem arises because it is usually very difficult to localize where samples have been added. One reason for this is that most samples are translucent and colour-less. Also the operator can not look at the plate all the time when new samples are to be added. The short distance between the wells and their small dimensions are also reasons for difficulties. Sample well positions may easily be mixed-up or omitted and two different samples may be added to the same well which can lead to erroneous results of the analysis with serious consequences. Moreover, the handling is most tiresome for the eyes of the operator.

It is an object of the present invention to eliminate or at least considerably reduce the above-mentioned difficulties. It is also an object of the present invention to make it possible, simultaneously with the addition of a sample solution in an easy way to get a visual indication showing that it has been added. These and other objects are obtained with the invention characterized in accordance with the appended claims.

Before the originating of the present invention no device of simple construction for immediate indicating of the adding of sample solution in a well has been available. In order to make possible a simple, fast and secure indication of an added sample, the added sample per se and the lens effect of the sample on the transmitted light is utilized according to the present invention. The lens effect is dependent upon the meniscus of the sample solution normally containing protein, detergent or other component lowering the surface tension, and upon the shape of the bottom of the well. When placing on a suitable distance a geometrical pattern or screen easily observable from above and through the separate wells, a reference pattern is obtained, which on addition of a sample is considerably altered through the refraction of the light. The visible image of the geometrical pattern or screen is diminished in wells with a plane bottom and it is enlarged in wells with a rounded bottom. In order to obtain an indication as clear as possible it has to be a significant contrast in the geometrical pattern or screen. This may be obtained by placing a light source under the geometrical pattern or screen with parts of it transilluminated. A very clear indication is obtained in this manner showing where a sample is being added at once when the addition is done and without dependence upon the sequence on the plate.

The present invention will be further described hereinafter with reference to the accompanying drawing wherein:

Figure 1 is a perspective view showing one embodiment of a device according to the invention,

Figure 2 is a cross sectional view as indicated with A-A of the embodiment in Figure 1,

Figure 3 is a top view of a multi-well plate placed on a device according to Figures 1 and 2, and

Figure 4 is a top view of another multi-well plate placed on a device according to Figures 1 and 2.

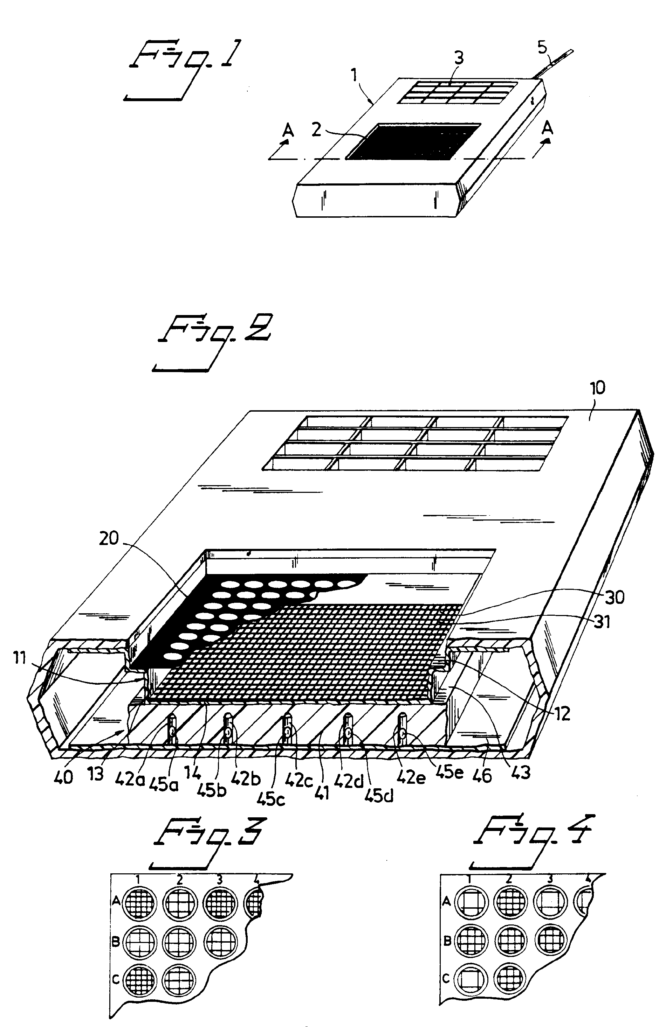

The embodiment according to the present invention as shown in Figure 1 consists of a casing 1 essentially shaped as a parallellepipedic box with the size and shape of a book. The underside of the casing is preferrably equipped with rubber-supports and can be equipped with collapsible supports at the far end making it possible to obtain approximately 15 degrees of inclination (not shown). The upper side has a section 2 adapted to a multi-well plate and a section 3 equipped with holes for ventilation. A main switch (not shown) and a supply mains cord 5 is in a conventional way arranged in a way that a transformed (not shown) placed within the casing can be connected to the mains voltage. The transformer is placed in the casing 1 in such a way that the generated head is ventilated by an air flow passing through apertures in the casings lower part (not show) and the section 3 with holes for ventilation in the upper part of the casing 1.

As is more clearly seen from Figure 2 the section 2 adapted for a multi-well plate consists of a space countersinked compared to the upper panel 10 of the casing 1. A holder means 11 is shaped with a flange attachable to the lower side of the upper panel 10 around the opening of section 2, forming the section 2 adopted to a multi-well plate by a countersink amounting to approximately 3 mm to a flange 12 stretching inwards and carrying a screen 20 on which a multi-well plate can be placed. The holder means 11 is furthermore shaped with a vertical part 13 stretching downwards from the flange approximately 10 mm to a horizontal bottom part 14. The holder means 11 is as an example manufactured by vacuum pressing of an almost transparent plastic material with the trade name Cobex.

The screen 20, which in Figure 2 is shown with a large section omitted, is manufactured of a sheet made of a transparent material of the same size and shape as the bottom side of a multi-well plate and consists of a non transparent part covering the total area of the sheet with the exception of circular sections corresponding to the location of the individual wells in the multi-well plate. By means of the screen 20 a masking of the light parties not supposed to be observed is obtained, whereby the individual wells more easily are distinguished from each other and the optical effect obtained according to the invention appears more distinctly. A sheet 30 is made of a transparent material of the same size and shape as the bottom part 14 of the holder means 11 and manufactured with a pattern surface 31 with the shape of a grid network with an intersectional distance of approximately 2,5 mm over the entire surface. The grid network as well as the non transparent part of the screen 20 are manufactured by silk screen printing directly on the transparent materials.

The light source 40 consists of a plate 41 made of plexiglass, a printed circuit board 46 and miniature lamps 45a-e. The plate 41 has a thickness of approximately 10 mm and a size at least corresponding to the bottom part 14 of the holder means 11. The upper surface 43 of the plate 41 is polished in order to emit a diffused light and from the lower surface of the plate holes 42a-e are drilled to a depth of approximately 8 mm. On the printed circuit board 46 the miniature lamps 45a-e are located in such a way that they fit into the holes 42a-e and the printed circuit board 46 is in a conventional way provided with printed circuits (not shown) for power supply of the miniature lamps 45a-e. Power supply from the transformer to the pinted circuit board is also performed in a conventional way. The light source 40 is mounted in direct connection to the bottom part 14 of the holder means 11 and with the lamps distributed in such a way that a uniform distribution of light is achieved at the surface 43 of the plate 41. In a preferred embodiment ten lamps are distributed in two rows situated along the longsides of the light source and with a slightly longer gap between the central than the outer lamps in each row. In order to obtain a maximum benefit of light all sides of the plate 41 are furnished with white reflecting layers except for a part of the upper surface 43 corresponding to the bottom part 14. The light source 40 described has a low power consumption and does not generate much heat, otherwise the samples might be affected.

When a mutlti-well plate is placed in the section 2 of the device according to Figures 1 and 2 the pattern surface 31 of the sheet 30 is visualized through the bottom of an individual well and the corresponding transparent section in the screen 20. When the pattern surface consists of a grid network it will appear according to the positions A2, B1, B2, B3 and C2 in Figure 3 and Figure 4 for wells without sample solution. In the positions A1, A3, A4 and C1, containing sample solution the grid network will appear diminished as in Figure 3 if the mutli-well plate is of the type having wells with flat bottoms, and enlarged according to Figure 4 if the wells are of the type having rounded bottoms. From Figures 3 and 4 it is clear that a distinct difference appears between empty wells and wells containing sample solution independly of the type of multi-well plate.

The preferred embodiment according to the figures should only be regarded as an example of the invention, which is only limited by the wording of the appended claims. For example, the light source can be differently shaped or even eliminated by using the light from other sources or the environment. The pattern of the surface 31 is not limited to be a grid network. It can also consist of other regularly arranged patterns of lines, dots, circles etc. but it can also be irregular and consist of number, letters or other symbols, all within the scope of the appended claims.

## Claims

1. A method of indicating the presence of sample solutions in wells in a multi-well plate, **characterized** by placing the multi-well plate in a distance from a pattern surface in such a way that the pattern of the surface is visible through the bottoms of the wells and that the visible picture of the pattern surface is presenting a distinct difference when observed through wells in which sample solution has been added.

2. A method according to claim 1, **characterized** by illuminating of the patterned surface with a light source.

3. A method according to claim 2, **characterized** by transmitting light through parts of the sheet on which the pattern surface is situated from the light source situated below the sheet.

4. A device for indicating the presence of sample solutions in sample wells in a muti-well plate, **characterized** by a pattern surface (31) and holder means (11) for keeping the multi-well plate in a predestinated distance from the pattern surface (31) in such a way that when the pattern surface (31) is observed through the bottoms of the wells a distinct difference in the picture is shown in wells with sample solution added.

5. A device according to claim 4, **characterized** in that the pattern surface (31) is situated on a sheet (30) supporting a screen or another geometrical pattern.

6. A device according to any of claims 4 or 5, **characterized** by a screen (20) comprising a masking of non transparent material with translucent sections corresponding to the wells of a multi-well plate supported by the holder means (11).

7. A device according to any of the claims 4, 5 or 6, **characterized** in that it comprises a light source (40).

8. A device according to claim 7, **characterized** in that the light source (40) comprises a plate (41) with a diffusing surface (43) and lamps so distributed as to obtain an even distribution of light over the surface (43).

9. A device according to claim 8, **characterized** in that the sheet (30) with the pattern surface (31) is arranged on the diffusing surface of the plate (41) and that the sheet is made of transparent material.

10. The use of a pattern surface arranged at a distance under a multi-well plate for visual indication of the presence of a sample solution in sample wells based upon the change of the pattern caused by refraction in the sample.

11. The use according to claim 10, in which the pattern surface is arranged on a sheet of at least partly transparent material and a light source is used for transillumination.

## Patentansprüche

1. Anzeigeverfahren für das Vorhandensein von Probelösungen in Kavitäten einer Mehrkavitätenplatte, **dadurch gekennzeichnet**, die Mehrkavitätenplatte beabstandet von einer gemusterten Fläche so anzuordnen, dass das Muster der Fläche durch den Boden der Kavitäten sichtbar wird und dass das sichtbare Bild der gemusterten Fläche einen deutlichen Unterschied bei Betrachtung durch die die Proben enthaltenden Kavitäten aufweist.

2. Verfahren gemäss Patentanspruch 1, **dadurch gekennzeichnet,** dass die Beleuchtung der gemusterten Fläche mit einer Lichtquelle erfolgt.

3. Verfahren gemäss Patentanspruch 2, **gekennzeichnet** durch die Überführung von Licht durch Teile des Bogen, auf welchem die gemusterte Fläche sich befindet, von der unter dem Bogen liegenden Lichtquelle.

4. Anzeigevorrichtung für das Vorhandensein von Probelösungene in Probefächern einer Mehrkavitätenplatte, **gekennzeichnet durch** eine gemusterte Fläche (31) und eines Befestigungsvorrichtung (11) zum Festhalten der Mehrkavitätenplatte in einem im Voraus festgelegtem Abstand von der gemusterten Fläche (31) auf solche Weise, dass bei Betrachtung der gemusterten Fläche durch die Böden der Kavitäten ein deutlicher Unterschied im Bilde in den mit Lösung gefüllten Kavitäten erscheint.

5. Vorrichtung gemäss Patentanspruch 4, **dadurch gekennzeichnet,** dass die gemusterte Fläche (31) auf einem Bogen (30) zur Unterstützung eines Siebes oder eines ähnlichen geometrischen Musters angeordnet ist.

6. Vorrichtung gemäss einem der Patentansprüche 4 oder 5, **gekennzeichnet durch** ein eine Maslierung aus undurchsichtigem Werkstoff enthaltendes Sieb (20) mit durchsichtigen, den Fächern der von der Befestingungsvorrichtung (11) gehaltenen Mehrkavitätenplatte entsprechenden Teilen.

7. Vorrichtung gemäss einem der Patentansprüche 4, 5 oder 6, **dadurch gekennzeichnet,** dass sie eine Lichtquelle (40) enthält.

8. Vorrichtung gemäss Patentanspruch 7, **dadurch gekennzeichnet,** dass die Lichtquelle (40) eine Platte (41) mit einer streuenden Fläche (43) umfasst sowie Lampen, die so angeordnet sind, dass eine gleichmässige Verteilung von Licht über die Fläche erfolgt.

9. Vorrichtung gemäss Patentanspruch 8, **dadurch gekennzeichnet**, dass der Bogen (30) mit der gemusterten Fläche (31) auf der diffundierende Fläche der Platte (41) angeordnet ist und dass der Bogen aus durchsichtigem Werkstoff besteht.

10. Verwendung einer gemusterten, von einer Mehrkavitätenplatte beabstandeten Fläche zur sichtbaren Anzeige des Vorhandenseins einer Probelösung in Probekavitäten, die auf der Veränderung des durch die Lichtbrechung in der Probe hervorgerufenen Musters beruht.

11. Verwendung gemäss Patentanspruch 10, **dadurch gekennzeichnet,** dass die gemusterte Fläche auf einem Bogen aus zumindestens teilweise durchsichtigem Werkstoff angeordnet ist und dass eine Lichtquelle für die Durchleuchtung vorgesehen ist.

## Revendications

1. Procédé de l'indication de la présence des solutions des épreuves dans des cupules d'une plaque mutlicupules **caracterisé** par placant la plaque mutlicupules à une distance d'une surface dessinée en facon que le dessin de la surface soyait visible à travers les fonds des cupules et en ce que l'image visible de la surface dessinée se présente avec une différence distincte étant observée à travers les cupules, dans lesquelles la solution des épreuves a été ajoutée.

2. Procédé selon la revendication 1, **caracterisé** par l'illimination de la surface dessinée avec une source de lumière.

3. Procédé selon la revendication 2, **caracterisé** par la transmission de la lumière à travers des parties d'une feuille, sur laquelle la surface dessinée de la source de lumière est située au dessous de la feuille.

4. Dispositif pour l'indication de la présence des solutions des épreuves dans des cupules d'une plaque multicupules **caracterisé** par une surface dessinée (31) et un élément de fixation (11) pour tenir la plaque multicupules à une distance prédestinée de la surface dessinée (31) de facon qu'une différence distincte dans l'image est observée en regardant la surface dessinée (31) à travers les fonds des cupules dans des cupules avec la solution des épreuves ajoutées.

5. Dispositif selon la revendication 4, **caracterisé** en ce que la surface dessinée (31) est située sur une feuille (30) supportant une grille ou un autre dessin géométrique.

6. Dispositif selon l'une des revendications 4 ou 5, **caractérisé** par une grille (20) comprénant un masque des matériaux non-transparents avec des sections translucides correspondantes aux cupules d'une plaque multicupules supportée par l'élément de fixation (11).

7. Dispositif selon l'une des revendications 4, 5 ou 6, **caracterisé** en ce que le dispositif comprend une source de lumière (40).

8. Dispositif selon la revendication 7, **caracterisé** en ce que la source de lumière (40) comprend une plaque (41) avec une surface diffusante (43) et des lampes distributées d'une facon pour obtenir une distribution uniforme de lumière sur la surface (43).

9. Dispositif selon la revendication 4, **caracterisé** en ce que la feuille (30) avec la surface dessinée (31) ets arangée sur la surface diffusante de la plaque (41) et en ce que la feuille est fabrquée des materiaux transparents.

10. Utilisation d'une surface dessinée arrangée á une distance au dessous d'une plaque multicupules pour l'indication visuelle de la présence d'une solution des épreuves dans des cupules des épreuves se basant sur la modification du dessin par la réfraction dans l'épreuve.

11. Utilisation selon la revendication 4, **caracterisée** en ce que la surface dessinée est arrangée sur une feuille des materiaux transparents au moins partiallement et en ce qu'une source de lumière est usée pour la transillumination.

Fig. 1

Fig. 2

Fig. 3

Fig. 4